# EUROPEAN PATENT APPLICATION

(11) **EP 4 498 741 A1**
(43) Date of publication of application: **29.01.2025**
(21) Application number: 22925506.2
(22) Date of filing: 03.03.2022
(51) Int. Cl.: H04W 72/00

(54) **SIGNAL MEASUREMENT METHOD AND APPARATUS, AND DEVICE, MEDIUM AND PROGRAM PRODUCT**

(30) Priority: 14.02.2022 WO PCT/CN2022/076225
(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2022/079129
(87) International publication number: WO 2023/151144

(57) **Abstract**

The present application belongs to the field of communications. Disclosed are a signal measurement method and apparatus, and a device, a medium and a program product. The method comprises: according to a first time domain position of downlink information and a second time domain position of a positioning reference signal, determining whether to measure the positioning reference signal. By means of the method, whether a positioning reference signal is measured can be determined on the basis of a first time domain position and a second time domain position.

## Description

The invention claims priority of the Patent Application No. PCT/CN2022/076225, titled "Signal measurement method and apparatus, device, medium and program product", filed on February 14, 2022, the entire contents of which is incorporated by reference into this invention.

### TECHNICAL FIELD

The present invention relates to the communication field, and in particular to a signal measurement method and apparatus, a device, a medium and a program product.

### BACKGROUND

In 5G Rel-17, a method for positioning a terminal (also called User Equipment, UE) in a radio resource control inactive (RRC Inactive) state is introduced.

In the above method for positioning, it has been determined that a priority of other downlink information is higher than that of a positioning reference signal (PRS). Therefore, how to determine the reception conflict between the other downlink information and the positioning reference signal is an unsolved problem in the field.

### SUMMARY

Embodiments of the present invention provide a signal measurement method and apparatus, a device, a medium, and a program product. Described technical solutions will be described as follows.

According to a first aspect of the embodiments of the present invention, a signal measurement method is provided. The method includes:
determining whether to measure a positioning reference signal according to a first time domain position of downlink information and a second time domain position of the positioning reference signal.

According to a second aspect of the embodiments of the present invention, a signal measurement method is provided. The method includes:
receiving a criterion reported by a terminal, in which the criterion is used for determining whether to measure a positioning reference signal according to a first time domain position of downlink information and a second time domain position of the positioning reference signal.

According to a third aspect of the embodiments of the present invention, a signal measurement apparatus is provided. The apparatus includes:
a processing module, configured to determine whether to measure a positioning reference signal according to a first time domain position of downlink information and a second time domain position of the positioning reference signal.

According to a fourth aspect of the embodiments of the present invention, a signal measurement apparatus is provided. The apparatus includes:
a receiving module, configured to receive a criterion reported by a terminal, in which the criterion is used for determining whether to measure a positioning reference signal according to a first time domain position of downlink information and a second time domain position of the positioning reference signal.

According to a fifth aspect of the embodiments of the present invention, a terminal is provided. The terminal includes:
a processor; and
a transceiver connected to the processor.

The processor is configured to load and execute executable instructions to implement steps at the terminal side in the signal measurement method described in the above various aspects.

According to a sixth aspect of the embodiments of the present invention, an access network device and/or a location server is provided. The access network device and/or the location server includes:
a processor; and
a transceiver connected to the processor.

The processor is configured to load and execute executable instructions to implement steps at the access network device and/or location server side in the signal measurement method described in the above various aspects.

According to a seventh aspect of the embodiments of the present invention, a computer-readable storage medium is provided. The computer-readable storage medium has at least one instruction, at least one program, a code set or an instruction set stored therein. The at least one instruction, the at least one program, the code set or the instruction set is loaded and executed by a processor to implement the signal measurement method described in the above various aspects.

According to an eighth aspect of the embodiments of the present invention, a computer program product (or a computer program) is provided. The computer program product (or the computer program) includes computer instructions, and the computer instructions are stored in a computer-readable storage medium. A processor of a computer device reads the computer instructions from the computer-readable storage medium, and the processor executes the computer instructions, so that the computer device implements the signal measurement method described in the above various aspects.

The technical solutions provided by the embodiments of the present invention may include the following beneficial effects.

In the above signal measurement method, if a terminal is in a radio resource control inactive state, the terminal may determine whether there is the reception conflict between downlink information and a positioning reference signal based on a first time domain position of the downlink information and a second time domain position of the positioning reference signal. A criterion for selecting to measure or not to measure the positioning reference signal (i.e., whether to measure the positioning reference signal) is provided.

It should be understood that both the foregoing general description and the following detailed description are explanatory only, and shall not be construed to limit the present invention.

### BRIEF DESCRIPTION OF THE DRAWINGS

In order to clearly illustrate technical solutions in embodiments of the invention, a brief description of accompanying drawings used in embodiments is given below. Obviously, the accompanying drawings in the following descriptions are merely part embodiments of the invention, and for those skilled in the art, other accompanying drawings can also be obtained based on these accompanying drawings without creative labor.
FIG 1 is a schematic diagram illustrating a communication system according to an embodiment of the invention.
FIG 2 is a flow chart illustrating a signal measurement method according to an embodiment of the invention.
FIG 3 is a flow chart illustrating a signal measurement method according to another embodiment of the invention.
FIG 4 is a schematic diagram illustrating a first time window according to an embodiment of the invention.
FIG 5 is a schematic diagram illustrating an overlap of symbols on a time slot according to an embodiment of the invention.
FIG 6 is a schematic diagram illustrating an overlap of symbols on a time slot according to another embodiment of the invention.
FIG 7 is a schematic diagram illustrating symbols on a time slot without an overlap according to an embodiment of the invention.
FIG 8 is a schematic diagram illustrating symbols on a time slot without an overlap according to another embodiment of the invention.
FIG 9 is a flow chart illustrating a signal measurement method according to another embodiment of the invention.
FIG 10 is a schematic diagram illustrating a second time window according to an embodiment of the invention.
FIG 11 is a schematic diagram illustrating an overlap of symbols on a time slot according to another embodiment of the invention.
FIG 12 is a schematic diagram illustrating symbols on a time slot without an overlap according to another embodiment of the invention.
FIG 13 is a block diagram illustrating a signal measurement apparatus according to an embodiment of the invention.
FIG 14 is a block diagram illustrating a signal measurement apparatus according to another embodiment of the invention.
FIG 15 is a block diagram illustrating a terminal according to an embodiment of the invention.
FIG 16 is a block diagram illustrating an access network device according to an embodiment of the invention.

### DETAILED DESCRIPTION

Embodiments will be described in detail herein, examples of which are illustrated in the accompanying drawings. When the following description refers to the accompanying drawings, the same or similar elements may be denoted by the same numerals in different accompanying drawings, unless otherwise indicated. The implementations described in the following embodiments do not represent all implementations consistent with the invention. Instead, they are merely examples of apparatuses and methods consistent with aspects of embodiments of the invention as detailed in the appended claims.

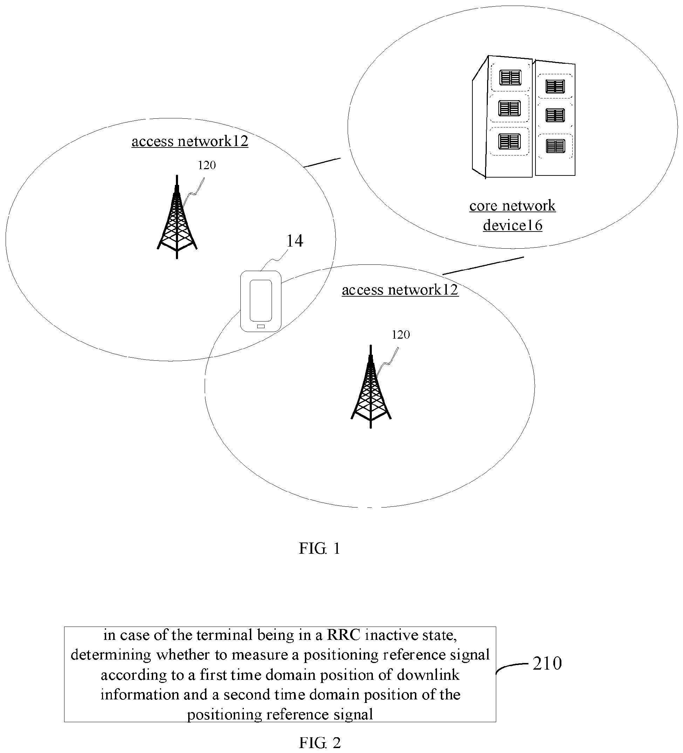

FIG 1 is a schematic diagram illustrating a communication system according to an embodiment of the invention. The communication system may include: an access network 12, a user terminal 14 and a core network device 16.

The access network 12 includes multiple access network devices 120. The access network device 120 may be a base station. The base station is an apparatus deployed in the access network and configured to provide a wireless communication function for the user terminal (terminal for short) 14. The base station may include various forms of macro stations, micro base stations, relay stations, access points and the like. Names of a device with a base station function may be different in systems with different wireless access technologies. For example, the device is called eNodeB or eNB in a long-term evolution (LTE) system, and the device is called gNB or gNodeB in a 5G new radio (NR) system. With the development of communication technologies, the name "base station" may be described and changed. In a positioning system, a transmission reception point (TRP) is further introduced. Each access network device can contain at least one TRP. Multiple TRPs send positioning reference signals. The terminal measures the positioning reference signals sent by the multiple TRPs and reports measurement results. For some of these TRPs, transmission is performed by the access network devices belonging to a serving cell of the terminal. For some of these TRPs, transmission is performed by the access network devices belonging to an adjacent cell (that is, a non-serving cell) of the terminal. For convenience, in embodiments of the invention, the above apparatuses for providing the wireless communication function for the terminal are collectively referred to as the network device.

The terminal 14 may include various handheld devices, vehicle-mounted devices, wearable devices, and computing devices having the wireless communication function, or other processing devices connected to a wireless modem, various forms of terminals (UEs), mobile stations (MSs), terminal devices, and the like. For the convenience of description, the above devices are collectively referred to as the user terminal. The access network device 120 communicates with the user terminal 14 through some air interface technologies, such as a Uu interface.

The core network device 16 includes a location management function network element. Optionally, the location management function network element includes a location server, and the location server can be implemented as any of the following: location management function (LMF), enhanced serving mobile location centre (E-SMLC), secure user plane location (SUPL), SUPL location platform (SUPL SLP). The terminal device and the location server use an LTE positioning protocol (LPP) for communication transmission.

The technical solutions of the embodiments of the present invention can be applied to various communication systems, for example, Global System of Mobile Communication (GSM) system, Code Division Multiple Access (CDMA) system, Wideband Code Division Multiple Access (WCDMA) system, General Packet Radio Service (GPRS), Long Term Evolution (LTE) system, LTE Frequency Division Duplex (FDD) system, LTE Time Division Duplex (TDD) system, Advanced long Term Evolution (LTE-A) system, New Radio (NR) system, evolution system of NR system, LTE-based access to Unlicensed spectrum (LTE-U) system, NR-U system, Universal Mobile Telecommunication System (UMTS), Worldwide Interoperability for Microwave Access (WiMAX) communication system, Wireless Local Area Networks (WLAN), Wireless Fidelity (WiFi), next generation communication systems or other communication systems, etc.

Generally speaking, the number of connections supported by traditional communication systems is limited and easy to implement. However, with development of the communication technologies, mobile communication systems will not only support traditional communication, but also support, for example, Device to Device (D2D) communication, Machine to Machine (M2M) communication, Machine Type Communication (MTC), Vehicle to Vehicle (V2V) communication and Vehicle to Everything (V2X) system, etc. Embodiments of the present invention can also be applied to these communication systems.

FIG 2 is a flow chart illustrating a signal measurement method according to an embodiment of the invention. The method may be applied to a terminal in the communication system illustrated in FIG 1. The method includes the following steps.

At step 210, in case of the terminal being in a RRC inactive state, whether to measure a positioning reference signal is determined according to a first time domain position of downlink information and a second time domain position of the positioning reference signal.

The downlink information refers to information sent by an access network device, and the downlink information includes a downlink channel and/or signal.

For example, the downlink channel and/or signal includes at least one of the following:
a physical downlink control channel (PDCCH);
a physical downlink shared channel (PDSCH);
a Synchronization Signal/PBCH Block (SSB), including a Primary Synchronization Signal (PSS), a Secondary Synchronization Signal (SSS), a Physical Broadcast Channel (PBCH) and a PBCH Demodulation Reference Signal (DMRS);
a System Information Block 1 (SIB1);
a Control Resource Set 0 (CORESETO);
a Message 2 (Msg2), that is, a random access response of step 2 in a 4-step random access procedure;
a Message B (MsgB), that is, a random access response of step 2 in a 2-step random access procedure;
paging; or
Downlink Small Data Transmission (DL SDT).

For example, when the terminal is in the RRC inactive state, the downlink information is sent by the access network device on an initial downlink bandwidth part (initial DL BWP) of the terminal.

For example, when the terminal is in the RRC inactive state, the first time domain position of the downlink information and the second time domain position of the positioning reference signal are obtained. The above first time domain position refers to a time domain resource occupied by the network device for sending the downlink information to the terminal in a downlink scenario. The above second time domain position refers to a time domain resource occupied by the access network device for sending the PRS to the terminal in the downlink scenario. The terminal determines, according to the first time domain position and the second time domain position, whether the time domain resources occupied by the downlink information and the positioning reference signal overlap partially or entirely (that is, determining whether there is a reception conflict between the downlink information and the positioning reference signal), and then determines whether to measure the positioning reference signal based on whether there is the reception conflict between the downlink information and the positioning reference signal. The above reception conflict means that the time domain resource required for receiving the downlink information and the time domain resource required for receiving the PRS partially or entirely overlap, or a time interval between the time domain resources is smaller than a time interval threshold (that is, the time interval is small).

For example, the first time domain position and/or the second time domain position is configured for the terminal by the access network device; or configured for the terminal by the location server.

For example, the above first time domain position and the above second time domain position may be time domain positions on a same frequency domain, or time domain positions on different frequency domains, such as time domain positions on different bandwidth parts (BWPs).

For example, if the terminal determines, based on the first time domain position and the second time domain position, that the time domain resources occupied by the downlink information and the positioning reference signal partially or entirely overlap, or the time interval between the time domain resources is less than the time interval threshold, that is, determining that there is the reception conflict between the downlink information and the positioning reference signal, then the positioning reference signal is not measured. If the terminal determines, based on the first time domain position and the second time domain position, that the time domain resources occupied by the downlink information and the positioning reference signal do not overlap, or the time interval is greater than or equal to the time interval threshold, that is, determining that there is no reception conflict between the downlink information and the positioning reference signal, then the positioning reference signal is measured.

To sum up, in the signal measurement method provided by this embodiment, when the terminal is in the RRC inactive state, the terminal may determine, based on the first time domain position of the downlink information and the second time domain position of the positioning reference signal, whether there is a reception conflict between the downlink information and the positioning reference signal, so that a criterion for selecting to measure or not to measure the positioning reference signal (i.e., whether to measure the positioning reference signal) is provided.

The above positioning reference signal can be located on the initial downlink bandwidth part, that is, on the same DLBWP as the downlink information. Alternatively, the positioning reference signal can also be located on a downlink bandwidth part other than the initial downlink bandwidth part. For the above two different scenarios, the manners of the terminal determining whether to measure the positioning reference signal are different.

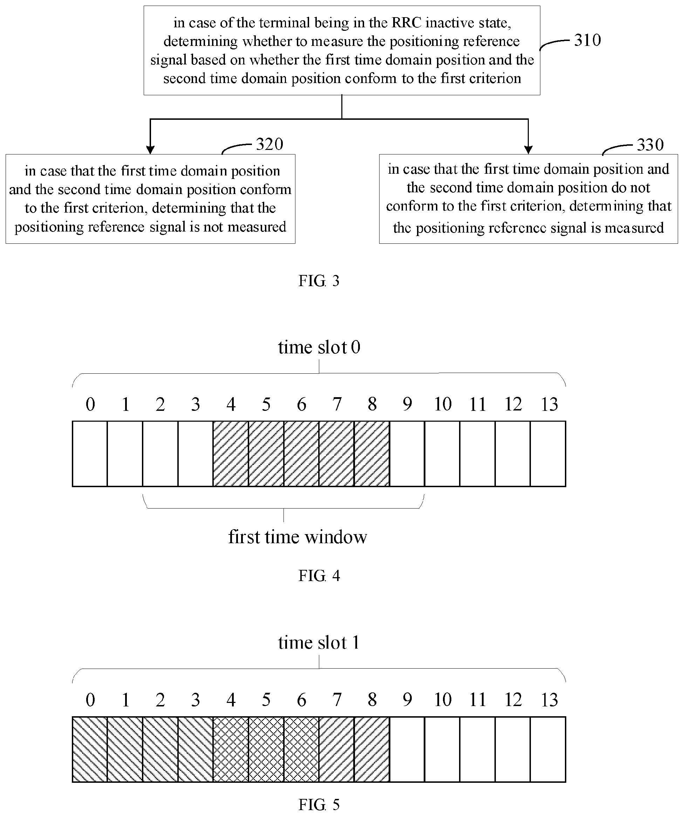

In some embodiments, when the positioning reference signal is located on the initial downlink bandwidth part, the terminal uses a first criterion to determine whether to measure the positioning reference signal, as shown in FIG 3, the step 210 may include a step 310 as shown below.

At step S310, in case of the terminal being in the RRC inactive state, whether to measure the positioning reference signal is determined based on whether the first time domain position and the second time domain position conform to the first criterion.

The first criterion includes at least one of a criterion type 1 or a criterion type 2.

The criterion type 1 includes a criterion that there is an overlap between a first symbol in the first time domain position and a second symbol in the second time domain position.

The criterion type 2 includes a criterion that the second symbol in the second time domain position is within a first time window, in which the first time window refers to a time window corresponding to the first time domain position.

The above first time window is a time window corresponding to the first time domain position in case that the positioning reference signal is located on the initial downlink bandwidth part. Optionally, the first time window includes symbols at the first time domain position, X1 symbols before the first time domain position, and Y1 symbols after the first time domain position, where X1 and Y1 are non-negative integers.

For example, as illustrated in FIG 4, a time slot 0 includes 14 symbols 0-13. Assuming that the first time domain position of the downlink information includes symbols 4-8 on the time slot 0, X1 takes a value of 2, and Y1 takes a value of 1, the terminal determines that the first time window includes symbols 2-9 on the time slot 0.

Optionally, the X1 symbols and the Y1 symbols are determined based on a subcarrier spacing of the initial downlink bandwidth part. For example, the terminal obtains the subcarrier spacing of the initial downlink bandwidth part after determining to adopt the criterion type 2, or after starting a positioning function, or after starting the device itself, and determines, based on the subcarrier spacing of the initial downlink bandwidth part, the X1 symbols and the Y1 symbols and/or a symbol length of each of the X1 symbols and the Y1 symbols. For example, there is a corresponding relationship among the subcarrier spacing of the initial downlink bandwidth part, X1 and Y1, and X1 and Y1 corresponding to the subcarrier spacing of the initial downlink bandwidth part are determined based on the above corresponding relationship.

After determining the values of X1 and Y1, the terminal reports its capability to the access network device and/or the location server. For example, the terminal can report X1 and Y1 to the access network device and/or the location server. For another example, the terminal can also report, to the access network device and/or the location server, that at least one of the criterion type 1 or the decision criterion type 2 is supported. In this way, the access network device and/or the location server can clearly know the PRS received by the terminal.

Then, the terminal performs steps 320 to 330 according to a determination result as follows.

At step 320, in case that the first time domain position and the second time domain position conform to the first criterion, it is determined that the positioning reference signal is not measured.

For example, if the first symbol in the first time domain position and the second symbol in the second time domain position partially or entirely overlap, the terminal determines not to measure the positioning reference signal. For example, in FIG 5, the first time domain position includes symbols 0-6 on a time slot 1, the second time domain position includes symbols 4-8 on the time slot 1, the symbols 4-6 in the first time domain position and the symbols 4-6 in the second time domain position overlap, it is determined that the first time domain position and the second time domain position conform to the criterion type 1, and the terminal does not measure the positioning reference signal.

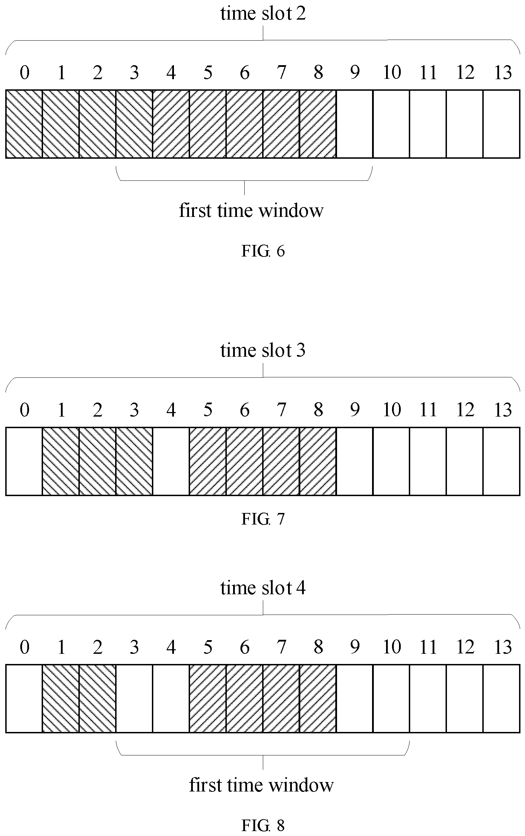

Or, if the second symbol in the second time domain position is within the first time window, the terminal determines not to measure the positioning reference signal. That is, if some or all symbols in the second time domain position are within the first time window, the terminal determines not to measure the positioning reference signal. For example, in FIG 6, the first time domain position includes symbols 4-8 on a time slot 2, and the second time domain position includes symbols 0-3 on the time slot 2. When the values of X1 and Y1 are both 1 , the first time window includes symbols 3 to 9, therefore, symbol 3 in the second time domain position is within the first time window, the terminal determines that the first time domain position and the second time domain position conform to the criterion type 2, and the terminal does not measure the positioning reference signal.

Optionally, the terminal determines not to measure the positioning reference signal when the first time domain position and the second time domain position conform to the criterion type 1 and the criterion type 2. Alternatively, the terminal determines not to measure the positioning reference signal when the first time domain position and the second time domain position conform to the criterion type 1 or the criterion type 2.

At step 330, in case that the first time domain position and the second time domain position do not conform to the first criterion, it is determined that the positioning reference signal is measured.

For example, if the first symbol in the first time domain position and the second symbol in the second time domain position do not overlap, the terminal determines to measure the positioning reference signal. For example, in FIG 7, the first time domain position includes symbols 1-3 on a time slot 3, the second time domain position includes symbols 5-8 on the time slot 3, the symbols in the first time domain position and the symbols in the second time domain position do not overlap, it is determined that the first time domain position and the second time domain position do not conform to the criterion type 1, and the terminal measures the positioning reference signal.

Or, if the second symbol in the second time domain position is outside the first time window, the terminal determines to measure the positioning reference signal. That is, if all the symbols in the second time domain position are outside the first time window, the terminal determines to measure the positioning reference signal. For example, in FIG 8, the first time domain position includes symbols 5-8 on a time slot 4, and the second time domain position includes symbols 1-2 on the time slot 4. When the values of X1 and Y1 are both 2 , the first time window includes symbols 3 to 10, therefore, symbols 1 to 2 in the second time domain position are outside the first time window, the terminal determines that the first time domain position and the second time domain position do not conform to the criterion type 2, and the terminal measures the positioning reference signal.

Optionally, the terminal determines to measure the positioning reference signal when the first time domain position and the second time domain position do not conform to the criterion type 1 and/or the criterion type 2.

It should be noted that the above X1 and Y1 may be used to indicate the time interval threshold. For example, X1 may be used to indicate the time interval threshold between a starting position of the second time domain position and a starting position of the first time domain position, and Y1 may be used to indicate the time interval threshold between an ending position of the second time domain position and an ending position of the first time domain position. If the ending position of the second time domain position is before the starting position of the first time domain position and the time interval between the ending position of the second time domain position and the starting position of the first time domain position is greater than or equal to X1, or, if the starting position of the second time domain position is after the ending position of the first time domain position and the time interval between the starting position of the second time domain position and the ending position of the first time domain position is greater than or equal to Y1, it is determined that all symbols in the second time domain position are outside the first time window.

To sum up, in the signal measurement method provided by this embodiment, the situation that the positioning reference signal is located on the initial downlink bandwidth part is considered, and then the manner of determining whether to measure the positioning reference signal is determined based on this situation, so that the measurement of the positioning reference signal is more suitable to the actual application scenario.

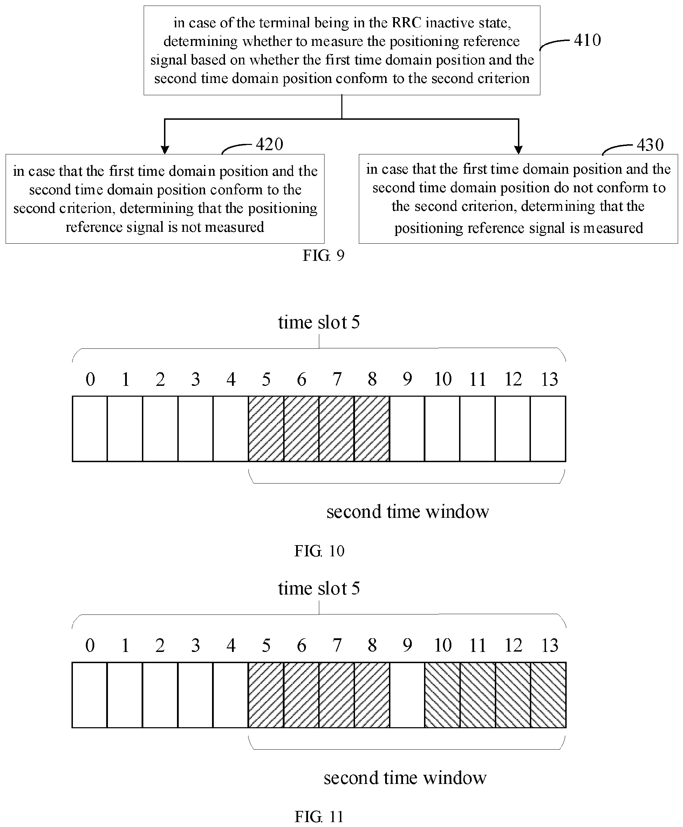

In some other embodiments, in case that the positioning reference signal is located on a downlink bandwidth part other than the initial downlink bandwidth part, the terminal uses the second criterion to determine whether to measure the positioning reference signal, as shown in FIG 9, the step 210 may include a step 410, which is described as follows.

At step 410, in case of the terminal being in the RRC inactive state, whether to measure the positioning reference signal is determined based on whether the first time domain position and the second time domain position conform to the second criterion.

The second criterion includes a criterion type 3.

The criterion type 3 includes a criterion that the second symbol in the second time domain position is within a second time window, in which the second time window refers to a time window corresponding to the first time domain position.

The above second time window is a time window corresponding to the first time domain position in case that the positioning reference signal is located on another downlink bandwidth part. Optionally, the second time window includes: symbols at the first time domain position, X2 symbols before the first time domain position, and Y2 symbols after the first time domain position, where X2 and Y2 are non-negative integers. For example, the first time domain position in FIG 10 includes symbols 5-8 on a time slot 5, X2 takes a value of 0, and Y2 takes a value of 5, then the second time window includes symbols 5-13.

Optionally, the X2 symbols and the Y2 symbols are determined based on the subcarrier spacing of the initial downlink bandwidth part. For example, the terminal obtains the subcarrier spacing of the initial downlink bandwidth part after determining to adopt the second criterion, or after starting the positioning function, or after starting the device itself, and the terminal determines, based on the subcarrier spacing of the initial downlink bandwidth part, the X2 symbols and the Y2 symbols and/or a symbol length of each of the X2 symbols and the Y2 symbols. For example, there is a corresponding relationship among the subcarrier spacing of the initial downlink bandwidth part, X2 and Y2, and X2 and Y2 corresponding to the subcarrier spacing of the initial downlink bandwidth part are determined based on the above corresponding relationship.

Or, the X2 symbols and Y2 symbols are determined based on the subcarrier spacing of the downlink bandwidth part other than the initial downlink bandwidth part, that is, determined based on the subcarrier spacing of the other downlink bandwidth part to which the positioning reference signal belongs. For example, after the terminal determines to adopt the second criterion, or after the positioning function is started, or after the device itself is started, the terminal obtains the subcarrier spacing of the other downlink bandwidth part, and determines, based on the subcarrier spacing of the other downlink bandwidth part, the X2 symbols and the Y2 symbols and/or a symbol length of each of the X2 symbols and the Y2 symbols. For example, there is a corresponding relationship among the subcarrier spacing of the other downlink bandwidth part, X2 and Y2, and X2 and Y2 corresponding to the subcarrier spacing of the other downlink bandwidth part are determined based on the above corresponding relationship.

Alternatively, the X2 symbols and the Y2 symbols are determined based on the subcarrier spacing of the initial downlink bandwidth part and a radio frequency (RF) retuning time. For example, after the terminal determines to adopt the second criterion, or after the positioning function is started, or after the device itself is started, the terminal obtains the subcarrier spacing of the initial downlink bandwidth part and the RF retuning time, and determines, based on the subcarrier spacing of the initial downlink bandwidth part and the RF retuning time, the X2 symbols and the Y2 symbols and/or a symbol length of each of the X2 symbols and the Y2 symbols. For example, there is a corresponding relationship among the subcarrier spacing of the initial downlink bandwidth part, the RF retuning time, X2 and Y2. Based on the above corresponding relationship, X2 and Y2 corresponding to the subcarrier spacing of the other downlink bandwidth part and the RF retuning time are determined.

Alternatively, the X2 symbols and the Y2 symbols are determined based on the subcarrier spacing of the other downlink bandwidth part and the RF retuning time. For example, after the terminal determines to adopt the second criterion, or after the positioning function is started, or after the device itself is started, the terminal obtains the subcarrier spacing of the other downlink bandwidth part and the RF retuning time, and determines, based on the subcarrier spacing of the other downlink bandwidth part and the RF retuning time, the X2 symbols and the Y2 symbols and/or a symbol length of each of the X2 symbols and the Y2 symbols. For example, there is a corresponding relationship among the subcarrier spacing of the other downlink bandwidth part, the RF retuning time, X2 and Y2. Based on the above corresponding relationship, X2 and Y2 corresponding to the subcarrier spacing of the other downlink bandwidth part and the RF retuning time are determined.

For example, the symbol length of each of the X2 symbols and the Y2 symbols is determined based on the subcarrier spacing. The values of X2 and Y2 are determined based on the subcarrier spacing and the RF retuning time. Optionally, X2 is greater than or equal to X1, and Y2 is greater than or equal to Y1. X1 and Y1 are used to determine the first time window corresponding to the first time domain position in case that the positioning reference signal is located on the initial downlink bandwidth part. Compared with X2 and Y2, X1 and Y1 need not to include the RF retuning time when the bandwidth part is switched.

After determining X2 and Y2 based on any of the above four methods, the terminal reports its own capability to the access network device and/or the location server, for example, the terminal may report to the access network device and/or the location server that the second criterion is supported, and report X2 and Y2. In this way, the access network device and/or the location server can clearly know the PRS received by the terminal.

Afterwards, the terminal performs steps 420 to 430 according to the determination result as follows.

At step 420, in case that the first time domain position and the second time domain position conform to the second criterion, it is determined that the positioning reference signal is not measured.

For example, if the second symbol in the second time domain position is within the second time window, the terminal determines not to measure the positioning reference signal. That is, if some or all of the symbols in the second time domain position are within the second time window, the terminal determines not to measure the positioning reference signal. For example, the first time domain position in FIG 11 includes symbols 5-8 on a time slot 5, X2 takes a value of 0, and Y2 takes a value of 5, then the second time window includes symbols 5-13 on the time slot 5. If the second time domain position includes symbols 10-13 on the time slot 5, it is determined that the second symbol in the second time domain position is within the second time window, and the terminal determines not to measure the positioning reference signal.

At step 430, in case that the first time domain position and the second time domain position do not conform to the second criterion, it is determined that the positioning reference signal is measured.

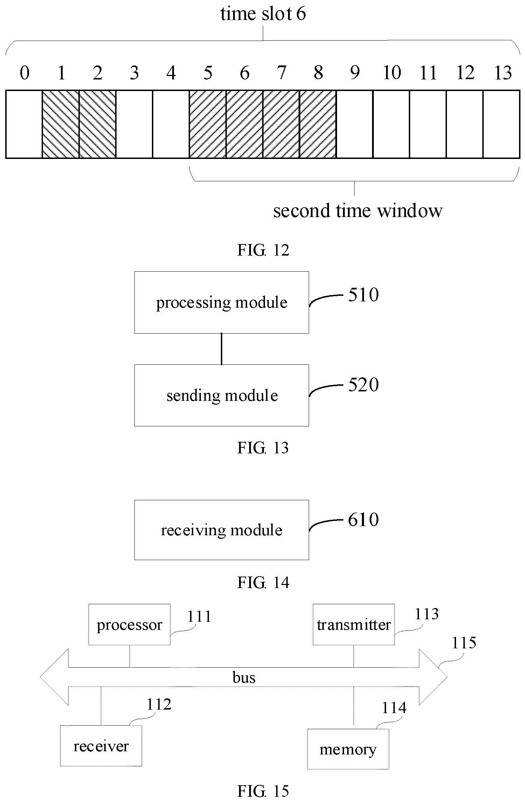

For example, if the second symbol in the second time domain position is outside the second time window, the terminal determines to measure the positioning reference signal. That is, if all the symbols in the second time domain position are outside the second time window, the terminal determines to measure the positioning reference signal. For example, the first time domain position in FIG 12 includes symbols 5-8 on a time slot 6, the second time window includes symbols 5-13 on the time slot 6, and the second time domain position includes symbols 1-2 on the time slot 6. It is determined that the second symbol in the second time domain position is outside the second time window, and the terminal determines to measure the positioning reference signal.

It should be noted that the above X2 and Y2 may be used to indicate the time interval threshold. For example, X2 can be used to indicate the time interval threshold between the starting position of the second time domain position and the starting position of the first time domain position, and Y2 can be used to indicate the time interval threshold between the ending position of the second time domain position and the ending position of the first time domain position. If the ending position of the second time domain position is before the starting position of the first time domain position and the time interval between the ending position of the second time domain position and the starting position of the first time domain position is greater than or equal to X2, or if the starting position of the second time domain position is after the ending position of the first time domain position and the time interval between the starting position of the second time domain position and the ending position of the first time domain position is greater than or equal to Y2, it is determined that all symbols in the second time domain position are located outside the second time window.

To sum up, in the signal measurement method provided by this embodiment, the situation that the positioning reference signal is located on the downlink bandwidth part other than the initial downlink bandwidth part is considered, and then the manner of determining whether to measure the positioning reference signal is determined based on this situation. The manner is different from the manner corresponding to the initial downlink bandwidth, so that the measurement of the positioning reference signal is more suitable to the actual application scenario.

In some embodiments, the access network device and/or the location server receives the criterion reported by the terminal. The criterion is used to determine whether to measure the positioning reference signal according to the first time domain position of the downlink information and the second time domain position of the positioning reference signal in case that the terminal is in the RRC inactive state.

For example, in case that the positioning reference signal is located on the initial downlink bandwidth part, the above criterion includes at least one of the criterion type 1 or the criterion type 2.

The criterion type 1 includes a criterion that there is an overlap between the first symbol in the first time domain position and the second symbol in the second time domain position.

The criterion type 2 includes a criterion that the second symbol in the second time domain position is within the first time window, in which the first time window refers to the time window corresponding to the first time domain position.

The first time window includes: symbols at the first time domain position, X1 symbols before the first time domain position, and Y1 symbols after the first time domain position, where X1 and Y1 are non-negative integers. The X1 symbols and the Y1 symbols are determined based on the subcarrier spacing of the initial downlink bandwidth part. If the terminal determines X1 and Y1 based on the above subcarrier spacing, it also reports X1 and Y1 to the access network device and/or location server, and correspondingly, the access network device and/or the location server receives X1 and Y1 reported by the terminal.

For example, in case that the positioning reference signal is located on the downlink bandwidth part other than the initial downlink bandwidth part, the above criterion includes the criterion type 3. The criterion type 3 includes a criterion that the second symbol in the second time domain position is within a second time window, in which the second time window refers to a time window corresponding to the first time domain position.

The second time window includes: symbols at the first time domain position, X2 symbols before the first time domain position, and Y2 symbols after the first time domain position, where X2 and Y2 are non-negative integers. The X2 symbols and the Y2 symbols are determined based on the subcarrier spacing of the initial downlink bandwidth part. Or, the X2 symbols and the Y2 symbols are determined based on the subcarrier spacing of the downlink bandwidth part other than the initial downlink bandwidth part, that is, determined based on the subcarrier spacing of the downlink bandwidth part where the positioning reference signal is located. Or, the X2 symbols and the Y2 symbols are determined based on the subcarrier spacing of the initial downlink bandwidth part and the radio frequency retuning time. Or, the X2 symbols and the Y2 symbols are determined based on the subcarrier spacing of the other downlink bandwidth part (that is, based on the subcarrier spacing of the downlink bandwidth part where the positioning reference signal is located) and the radio frequency retuning time. If the terminal determines X2 and Y2 based on the subcarrier spacing and/or the radio frequency retuning time, the terminal also reports X2 and Y2 to the access network device and/or the location server, and correspondingly, the access network device and/or the location server receives X2 and Y2 reported by the terminal.

To sum up, if the access network device (mainly the access network device to which the serving cell of the terminal belongs) can determine that the terminal cannot measure the positioning reference signal based on the above terminal capability reported by the terminal or the location server, and then needs not to send the positioning reference signal. However, since the access network device to which the adjacent cell of the terminal belongs does not know a sending time of the downlink information of the serving cell of the terminal, the adjacent cell will continue to send, but the terminal cannot receive it due to a conflict.

For example, the signal measurement method provided by the invention will be described as follows.

Firstly, the terminal determines the first time domain position of the downlink channel/signal and the second time domain position of the PRS, and determines whether to receive the PRS according to the criterion.
A) The downlink channel and/or signal contains at least one of the following:
   a Synchronization Signal/PBCH Block (SSB), including a Primary Synchronization Signal (PSS), a Secondary Synchronization Signal (SSS), a Physical Broadcast Channel (PBCH) and a PBCH Demodulation Reference Signal (DMRS);
   a System Information Block 1 (SIB 1);
   a Control Resource Set 0 (CORESETO);
   a Message 2 (Msg2), that is, a random access response of step 2 in a 4-step random access procedure;
   a Message B (MsgB), that is, a random access response of step 2 in a 2-step random access procedure;
   paging; or
   Downlink Small Data Transmission (DL SDT).
B) The UE is in the RRC_INACTIVE state, that is, the RRC inactive state.

Secondly, the criterion includes at least one of the following:
a criterion type 1: only if the PRS and the downlink channel/signal overlap on a certain symbol, then it is determined that there is a reception conflict between the PRS and the downlink channel/signal, and the terminal receives the downlink channel/signal but does not receive the PRS;
a criterion type 2: a time window is defined, that is, the first time window, whose starting position is located at the X1-th symbol/slot (time slot) before the downlink channel/signal, and whose ending position ends is located at the Y1-th symbol/slot after the downlink channel/signal. That is, this time window includes the symbols where the downlink channel/signal is located, X1 symbols before the downlink channel/signal and Y1 symbols after the downlink channel/signal; or
a criterion type 3: a time window is defined, that is, the second time window, whose starting position is located at the X2-th symbol/slot before the downlink channel/signal, and whose ending position is located at the Y2-th symbol/slot after the downlink channel/signal. That is, this time window includes the symbols where the downlink channel/signal is located, X2 symbols before the downlink channel/signal and Y2 symbols after the downlink channel/signal.

The criterion types 1 and 2 are applicable to the case that the PRS is located inside the initial DL BWP, while the criterion type 3 is applicable to the case that the PRS is located outside the initial DL BWP.

Thirdly, the terminal reports the UE capability (that is, terminal capability) to at least one of LMF or gNB.
A) For the PRS located inside the initial DL BWP, the terminal selects and reports at least one of the criterion type 1 or the criterion type 2. If the criterion type 2 is reported, the values of X1 and Y1 need to be further reported.
   X1 and Y1 are determined based on the subcarrier spacing (SCS) of the initial DL BWP.
B) For the PRS located outside the initial DL BWP, the terminal reports the values of X2 and Y2.

X2 and Y2 are determined based on the SCS of the initial DL BWP or based on the SCS of the BWP where the PRS is located.

X2>=X1, Y2>=Y1. Because in criterion type 3, the BWP of the PRS is different from the BWP of other channels/signals (which are always located in the initial DL BWP), so the RF retuning time is also required.

FIG 13 is a block diagram of a signal measurement apparatus provided by an embodiment of the present invention. The apparatus can be implemented as part or all of the UE through software, hardware or a combination of the software and hardware. The apparatus includes a processing module 510.

The processing module 510 is configured to determine whether to measure a positioning reference signal according to a first time domain position of downlink information and a second time domain position of the positioning reference signal in case that the terminal is in a radio resource control inactive state.

In some embodiments, the processing module 510 is configured to determine whether to measure the positioning reference signal based on whether the first time domain position and the second time domain position conform to a first criterion.

The first criterion includes at least one of a criterion type 1 or a criterion type 2.

The criterion type 1 includes a criterion that there is an overlap between a first symbol in the first time domain position and a second symbol in the second time domain position.

The criterion type 2 includes a criterion that the second symbol in the second time domain position is within a first time window, in which the first time window refers to a time window corresponding to the first time domain position.

In some embodiments, the positioning reference signal is located on an initial downlink bandwidth part.

In some embodiments, the first time window includes: symbols at the first time domain position, X1 symbols before the first time domain position, and Y1 symbols after the first time domain position, where X1 and Y1 are non-negative integers.

In some embodiments, the X1 symbols and the Y1 symbols are determined based on a subcarrier spacing of an initial downlink bandwidth part.

In some embodiments, the apparatus further includes: a sending module 520.

The sending module 520 is configured to report X1 and Y1 to an access network device and/or a location server.

In some embodiments, the apparatus further includes: a sending module 520.

The sending module 520 is configured to report support for at least one of the criterion type 1 or the criterion type 2 to an access network device and/or a location server.

In some embodiments, the processing module 510 is configured to determine whether to measure the positioning reference signal based on whether the first time domain position and the second time domain position conform to a second criterion.

The second criterion includes a criterion type 3, the criterion type 3 includes a criterion that a second symbol in the second time domain position is within a second time window, in which the second time window refers to a time window corresponding to the first time domain position.

In some embodiments, the positioning reference signal is located on a downlink bandwidth part other than an initial downlink bandwidth part.

In some embodiments, the second time window includes: symbols at the first time domain position, X2 symbols before the first time domain position, and Y2 symbols after the first time domain position, where X2 and Y2 are non-negative integers.

In some embodiments, the X2 symbols and the Y2 symbols are determined based on a subcarrier spacing of an initial downlink bandwidth part; or
the X2 symbols and the Y2 symbols are determined based on a subcarrier spacing of a downlink bandwidth part other than an initial downlink bandwidth part; or
the X2 symbols and the Y2 symbols are determined based on a subcarrier spacing of an initial downlink bandwidth part and a radio frequency (RF) retuning time; or
the X2 symbols and the Y2 symbols are determined based on a subcarrier spacing of a downlink bandwidth part other than an initial downlink bandwidth part and a RF retuning time.

In some embodiments, the apparatus further includes: a sending module 520.

The sending module 520 is configured to report support for the second criterion and report X2 and Y2 to an access network device and/or a location server.

In some embodiments, X2 is greater than or equal to X1, and Y2 is greater than or equal to Y1; X1 and Y1 are used for determining the first time window corresponding to the first time domain position in case that the positioning reference signal is located on an initial downlink bandwidth part.

In some embodiments, the processing module 510 is configured to determine not to measure the positioning reference signal in case that the first time domain position and the second time domain position conform to the first criterion.

In some embodiments, the processing module 510 is configured to determine to measure the positioning reference signal in case that the first time domain position and the second time domain position do not conform to the first criterion.

In some embodiments, the processing module 510 is configured to determine not to measure the positioning reference signal in case that the first time domain position and the second time domain position conform to the second criterion.

In some embodiments, the processing module 510 is configured to determine to measure the positioning reference signal in case that the first time domain position and the second time domain position do not conform to the second criterion.

In some embodiments, the downlink information includes at least one of the following:
a synchronization signal/physical broadcast channel (PBCH) block;
a system information block 1;
a control resource set 0 (CORESETO);
a message 2;
a message B;
paging; or
a small data transmission (SDT).

To sum up, in the signal measurement apparatus provided in this embodiment, it can be determined, based on the first time domain position of the downlink information and the second time domain position of the positioning reference signal, whether there is a reception conflict between the downlink information and the positioning reference signal when it is in the RRC inactive state, which may provide a criterion for selecting to or not to measure the positioning reference signal, that is, whether to measure the positioning reference signal.

Fig. 14 is a block diagram of a signal measurement apparatus provided by an embodiment of the present invention. The apparatus can be implemented as part or all of an access network device and/or a location server through software, hardware or a combination of the software and hardware. The apparatus includes a receiving module 610.

The receiving module 610 is configured to receive a criterion reported by a terminal; in which the criterion is used for, when the terminal is in a radio resource control inactive state, determining whether to measure a positioning reference signal according to a first time domain position of downlink information and a second time domain position of the positioning reference signal.

In some embodiments, the criterion includes at least one of the following:
a criterion type 1 comprising a criterion that there is overlap between a first symbol in the first time domain position and a second symbol in the second time domain position; or
a criterion type 2 comprising a criterion that a second symbol in the second time domain position is within a first time window, in which the first time window refers to a time window corresponding to the first time domain position.

In some embodiments, the positioning reference signal is located on an initial downlink bandwidth part.

In some embodiments, the first time window includes: symbols at the first time domain position, X1 symbols before the first time domain position, and Y1 symbols after the first time domain position, where X1 and Y1 are non-negative integers.

In some embodiments, the X1 symbols and the Y1 symbols are determined based on a subcarrier spacing of an initial downlink bandwidth part.

In some embodiments, the receiving module 610 is configured to receive X1 and Y1 reported by the terminal.

In some embodiments, the criterion includes:
a criterion type 3 comprising a criterion that a second symbol in the second time domain position is within a second time window, in which the second time window refers to a time window corresponding to the first time domain position.

In some embodiments, the positioning reference signal is located on a downlink bandwidth part other than an initial downlink bandwidth part.

In some embodiments, the second time window includes: symbols at the first time domain position, X2 symbols before the first time domain position, and Y2 symbols after the first time domain position, where X2 and Y2 are non-negative integers.

In some embodiments, the X2 symbols and the Y2 symbols are determined based on a subcarrier spacing of an initial downlink bandwidth part; or
the X2 symbols and the Y2 symbols are determined based on a subcarrier spacing of a downlink bandwidth part other than an initial downlink bandwidth part; or
the X2 symbols and the Y2 symbols are determined based on a subcarrier spacing of an initial downlink bandwidth part and a radio frequency (RF) retuning time; or
the X2 symbols and the Y2 symbols are determined based on a subcarrier spacing of a downlink bandwidth part other than an initial downlink bandwidth part and a RF retuning time.

In some embodiments, the receiving module 610 is configured to receive X2 and Y2 reported by the terminal.

To sum up, in the signal measurement apparatus provided in this embodiment, if the apparatus can obtain the terminal capability and determine that the terminal cannot measure the positioning reference signal, then the positioning reference signal needs not to be sent. Since the access network device to which the adjacent cell of the terminal belongs does not know the sending time of the downlink information of the serving cell of the terminal, the adjacent cell will continue to send, but the terminal cannot receive it due to the conflict.

FIG 15 shows a schematic diagram of a UE provided by an embodiment of the present invention. The UE includes: a processor 111, a receiver 112, a transmitter 113, a memory 114 and a bus 115.

The processor 111 includes one or more processing cores, and the processor 111 executes various functional applications and information processing by running software programs and modules.

The receiver 112 and the transmitter 113 can be implemented as a communication component, which can be a communication chip.

The memory 114 is connected to the processor 111 through the bus 115.

The memory 114 may be used to store at least one instruction, and the processor 111 is used to execute the at least one instruction, so as to implement steps in the foregoing method embodiments.

In addition, the memory 114 can be implemented by any type of volatile or non-volatile storage devices or their combination. The volatile or non-volatile storage devices include but not limited to: magnetic or optical disks, Electrically Erasable Programmable Read Only Memory (EEPROM), Erasable Programmable Read Only Memory (EPROM), Static Random-Access Memory (SRAM), Read Only Memory (ROM), magnetic memory, flash memory, Programmable Read Only Memory (PROM).

In an embodiment, there is also provided a non-transitory computer-readable storage medium including instructions, such as a memory including instructions. The instructions can be executed by a processor of the UE to implement the above-mentioned signal measurement method. For example, the non-transitory computer-readable storage medium can be ROM, Random-Access Memory (RAM), Compact Disc Read Only Memory (CD-ROM), magnetic tape, floppy disk and optical data storage devices, etc.

A non-transitory computer-readable storage medium is provided. When instructions in the non-transitory computer storage medium are executed by a processor of the UE, the UE can execute the above-mentioned signal measurement method.

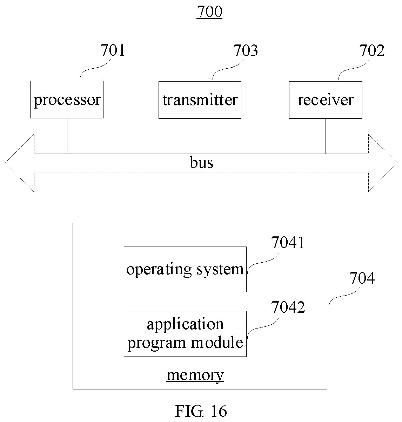

Fig. 16 is a block diagram of an access network device 700 according to an embodiment. The access network device 700 may be a base station.

The access network device 700 may include: a processor 701, a receiver 702, a transmitter 703 and a memory 704. The receiver 702, the transmitter 703 and the memory 704 are respectively connected to the processor 701 through a bus.

The processor 701 includes one or more processing cores, and the processor 701 executes the method performed by the access network device in the signal measurement method provided by the embodiments of the present invention by running software programs and modules. The memory 704 can be used to store the software programs and modules. Specifically, the memory 704 may store an operating system 7041 and an application program module 7042 required by at least one function. The receiver 702 is used to receive communication data sent by other devices, and the transmitter 703 is used to send communication data to other devices.

An embodiment of the present invention also provides a computer-readable storage medium. The computer-readable storage medium stores at least one instruction, at least one program, a code set or an instruction set, the at least one instruction, the at least one program, the code set or the instruction set is loaded and executed by a processor to implement the signal measurement method provided by the above method embodiments.

An embodiment of the present invention also provides a computer program product. The computer program product includes computer instructions stored in a computer-readable storage medium. A processor of a computer device reads the computer instructions from the computer-readable storage medium, and executes the computer instructions, so that the computer device implements the signal measurement method provided by each method embodiment above.

It should be understood that the term "plurality" mentioned herein refers to two or more than two. The term "and/or" describes the association relationship of associated objects, indicating that there may be three types of relationships, for example, A and/or B may indicate: A exists alone, A and B exist simultaneously, and B exists alone. The character "/" generally indicates that the associated objects have an "or" relationship.

Other embodiments of the invention will be apparent to those skilled in the art from consideration of the specification and practice of the invention disclosed here. This application is intended to cover any variations, uses, or adaptations of the invention following the general principles thereof and including such departures from the invention as come within known or customary practice in the art. It is intended that the specification and examples be considered as illustrative only, with a true scope and spirit of the invention being indicated by the following claims.

It will be appreciated that the invention is not limited to the exact construction that has been described above and illustrated in the accompanying drawings, and that various modifications and changes can be made without departing from the scope thereof. It is intended that the scope of the invention only be limited by the appended claims.

## Claims

1. A signal measurement method, comprising:
determining whether to measure a positioning reference signal according to a first time domain position of downlink information and a second time domain position of the positioning reference signal.

2. The method according to claim 1, wherein determining whether to measure the positioning reference signal according to the first time domain position of the downlink information and the second time domain position of the positioning reference signal comprises:
determining whether to measure the positioning reference signal based on whether the first time domain position and the second time domain position conform to a first criterion;
wherein, the first criterion comprises at least one of a criterion type 1 or a criterion type 2;
the criterion type 1 comprises a criterion that there is an overlap between a first symbol in the first time domain position and a second symbol in the second time domain position; and
the criterion type 2 comprises a criterion that the second symbol in the second time domain position is within a first time window, wherein the first time window refers to a time window corresponding to the first time domain position.

3. The method according to claim 2, wherein the positioning reference signal is located on an initial downlink bandwidth part.

4. The method according to claim 2, wherein the first time window comprises: symbols at the first time domain position, X1 symbols before the first time domain position, and Y1 symbols after the first time domain position, where X1 and Y1 are non-negative integers.

5. The method according to claim 4, wherein the X1 symbols and the Y1 symbols are determined based on a subcarrier spacing of an initial downlink bandwidth part.

6. The method according to claim 5, further comprising:
reporting X1 and Y1 to an access network device and/or a location server.

7. The method according to claim 2, further comprising:
reporting support for at least one of the criterion type 1 or the criterion type 2 to an access network device and/or a location server.

8. The method according to claim 1, wherein determining whether to measure the positioning reference signal according to the first time domain position of the downlink information and the second time domain position of the positioning reference signal comprises:
determining whether to measure the positioning reference signal based on whether the first time domain position and the second time domain position conform to a second criterion;
wherein, the second criterion comprises a criterion type 3, the criterion type 3 comprises a criterion that a second symbol in the second time domain position is within a second time window, wherein the second time window refers to a time window corresponding to the first time domain position.

9. The method according to claim 8, wherein the positioning reference signal is located on a downlink bandwidth part other than an initial downlink bandwidth part.

10. The method according to claim 8, wherein the second time window comprises: symbols at the first time domain position, X2 symbols before the first time domain position, and Y2 symbols after the first time domain position, where X2 and Y2 are non-negative integers.

11. The method according to claim 10, wherein,
the X2 symbols and the Y2 symbols are determined based on a subcarrier spacing of an initial downlink bandwidth part; or
the X2 symbols and the Y2 symbols are determined based on a subcarrier spacing of a downlink bandwidth part other than an initial downlink bandwidth part; or
the X2 symbols and the Y2 symbols are determined based on a subcarrier spacing of an initial downlink bandwidth part and a radio frequency (RF) retuning time; or
the X2 symbols and the Y2 symbols are determined based on a subcarrier spacing of a downlink bandwidth part other than an initial downlink bandwidth part and a RF retuning time.

12. The method according to claim 11, further comprising:
reporting support for the second criterion and reporting X2 and Y2 to an access network device and/or a location server.

13. The method according to claim 10, wherein X2 is greater than or equal to X1, and Y2 is greater than or equal to Y1; X1 and Y1 are used for determining the first time window corresponding to the first time domain position in case that the positioning reference signal is located on an initial downlink bandwidth part.

14. The method according to any one of claims 2 to 7, further comprising:
determining not to measure the positioning reference signal in case that the first time domain position and the second time domain position conform to the first criterion.

15. The method according to any one of claims 2 to 7, further comprising:
determining to measure the positioning reference signal in case that the first time domain position and the second time domain position do not conform to the first criterion.

16. The method according to any one of claims 8 to 13, further comprising:
determining not to measure the positioning reference signal in case that the first time domain position and the second time domain position conform to the second criterion.

17. The method according to any one of claims 8 to 13, further comprising:
determining to measure the positioning reference signal in case that the first time domain position and the second time domain position do not conform to the second criterion.

18. The method according to any one of claims 1 to 13, wherein the downlink information comprises at least one of:
a synchronization signal/physical broadcast channel (PBCH) block;
a system information block 1;
a control resource set 0 (CORESETO);
a message 2;
a message B;
paging; or
a small data transmission (SDT).

19. A signal measurement method, comprising:
receiving a criterion reported by a terminal, wherein the criterion is used for determining whether to measure a positioning reference signal according to a first time domain position of downlink information and a second time domain position of the positioning reference signal.

20. The method according to claim 19, wherein the criterion comprises at least one of:
a criterion type 1 comprising a criterion that there is overlap between a first symbol in the first time domain position and a second symbol in the second time domain position; or
a criterion type 2 comprising a criterion that a second symbol in the second time domain position is within a first time window, wherein the first time window refers to a time window corresponding to the first time domain position.

21. The method according to claim 20, wherein the positioning reference signal is located on an initial downlink bandwidth part.

22. The method according to claim 20, wherein the first time window comprises: symbols at the first time domain position, X1 symbols before the first time domain position, and Y1 symbols after the first time domain position, where X1 and Y1 are non-negative integers.

23. The method according to claim 22, wherein the X1 symbols and the Y1 symbols are determined based on a subcarrier spacing of an initial downlink bandwidth part.

24. The method according to claim 23, further comprising:
receiving X1 and Y1 reported by the terminal.

25. The method according to claim 19, wherein the criterion comprises:
a criterion type 3 comprising a criterion that a second symbol in the second time domain position is within a second time window, wherein the second time window refers to a time window corresponding to the first time domain position.

26. The method according to claim 25, wherein the positioning reference signal is located on a downlink bandwidth part other than an initial downlink bandwidth part.

27. The method according to claim 25, wherein the second time window comprises: symbols at the first time domain position, X2 symbols before the first time domain position, and Y2 symbols after the first time domain position, where X2 and Y2 are non-negative integers.

28. The method of claim 27, wherein,
the X2 symbols and the Y2 symbols are determined based on a subcarrier spacing of an initial downlink bandwidth part; or
the X2 symbols and the Y2 symbols are determined based on a subcarrier spacing of a downlink bandwidth part other than an initial downlink bandwidth part; or
the X2 symbols and the Y2 symbols are determined based on a subcarrier spacing of an initial downlink bandwidth part and a radio frequency (RF) retuning time; or
the X2 symbols and the Y2 symbols are determined based on a subcarrier spacing of a downlink bandwidth part other than an initial downlink bandwidth part and a RF retuning time.

29. The method according to claim 28, further comprising:
receiving X2 and Y2 reported by the terminal.

30. A signal measurement apparatus, comprising:
a processing module, configured to determine whether to measure a positioning reference signal according to a first time domain position of downlink information and a second time domain position of the positioning reference signal.

31. The apparatus according to claim 30, wherein,
the processing module is configured to determine whether to measure the positioning reference signal based on whether the first time domain position and the second time domain position conform to a first criterion;
wherein, the first criterion comprises at least one of a criterion type 1 or a criterion type 2;
the criterion type 1 comprises a criterion that there is an overlap between a first symbol in the first time domain position and a second symbol in the second time domain position; and
the criterion type 2 comprises a criterion that the second symbol in the second time domain position is within a first time window, wherein the first time window refers to a time window corresponding to the first time domain position.

32. The apparatus according to claim 31, wherein the positioning reference signal is located on an initial downlink bandwidth part.

33. The apparatus according to claim 31, wherein the first time window comprises: symbols at the first time domain position, X1 symbols before the first time domain position, and Y1 symbols after the first time domain position, where X1 and Y1 are non-negative integers.

34. The apparatus according to claim 33, wherein the X1 symbols and the Y1 symbols are determined based on a subcarrier spacing of an initial downlink bandwidth part.

35. The apparatus according to claim 34, further comprising: a sending module,
wherein the sending module is configured to report X1 and Y1 to an access network device and/or a location server.

36. The apparatus according to claim 31, further comprising: a sending module,
wherein the sending module is configured to report support for at least one of the criterion type 1 or the criterion type 2 to an access network device and/or a location server.

37. The apparatus according to claim 30, wherein,
the processing module is configured to determine whether to measure the positioning reference signal based on whether the first time domain position and the second time domain position conform to a second criterion;
wherein, the second criterion comprises a criterion type 3, the criterion type 3 comprises a criterion that a second symbol in the second time domain position is within a second time window, wherein the second time window refers to a time window corresponding to the first time domain position.

38. The apparatus according to claim 37, wherein the positioning reference signal is located on a downlink bandwidth part other than an initial downlink bandwidth part.

39. The apparatus according to claim 37, wherein the second time window comprises: symbols at the first time domain position, X2 symbols before the first time domain position, and Y2 symbols after the first time domain position, where X2 and Y2 are non-negative integers.

40. The apparatus according to claim 39, wherein,
the X2 symbols and the Y2 symbols are determined based on a subcarrier spacing of an initial downlink bandwidth part; or
the X2 symbols and the Y2 symbols are determined based on a subcarrier spacing of a downlink bandwidth part other than an initial downlink bandwidth part; or
the X2 symbols and the Y2 symbols are determined based on a subcarrier spacing of an initial downlink bandwidth part and a radio frequency (RF) retuning time; or
the X2 symbols and the Y2 symbols are determined based on a subcarrier spacing of a downlink bandwidth part other than an initial downlink bandwidth part and a RF retuning time.

41. The apparatus according to claim 40, further comprising: a sending module;
wherein the sending module is configured to report support for the second criterion and report X2 and Y2 to an access network device and/or a location server.

42. The apparatus according to claim 39, wherein X2 is greater than or equal to X1, and Y2 is greater than or equal to Y1; X1 and Y1 are used for determining the first time window corresponding to the first time domain position in case that the positioning reference signal is located on an initial downlink bandwidth part.

43. The apparatus according to any one of claims 31 to 36, wherein,
the processing module is configured to determine not to measure the positioning reference signal in case that the first time domain position and the second time domain position conform to the first criterion.

44. The apparatus according to any one of claims 31 to 36, wherein,
the processing module is configured to determine to measure the positioning reference signal in case that the first time domain position and the second time domain position do not conform to the first criterion.

45. The apparatus according to any one of claims 37 to 42, wherein,
the processing module is configured to determine not to measure the positioning reference signal in case that the first time domain position and the second time domain position conform to the second criterion.

46. The apparatus according to any one of claims 37 to 42, wherein,
the processing module is configured to determine to measure the positioning reference signal in case that the first time domain position and the second time domain position do not conform to the second criterion.

47. The apparatus according to any one of claims 30 to 42, wherein the downlink information comprises at least one of:
a synchronization signal/physical broadcast channel (PBCH) block;
a system information block 1;
a control resource set 0 (CORESETO);
a message 2;
a message B;
paging; or
a small data transmission (SDT).

48. A signal measurement apparatus, comprising:
a receiving module, configured to receive a criterion reported by a terminal, wherein the criterion is used for determining whether to measure a positioning reference signal according to a first time domain position of downlink information and a second time domain position of the positioning reference signal.

49. The apparatus according to claim 48, wherein the criterion comprises at least one of:
a criterion type 1 comprising a criterion that there is overlap between a first symbol in the first time domain position and a second symbol in the second time domain position; or
a criterion type 2 comprising a criterion that a second symbol in the second time domain position is within a first time window, wherein the first time window refers to a time window corresponding to the first time domain position.

50. The apparatus according to claim 49, wherein the positioning reference signal is located on an initial downlink bandwidth part.

51. The apparatus according to claim 49, wherein the first time window comprises: symbols at the first time domain position, X1 symbols before the first time domain position, and Y1 symbols after the first time domain position, where X1 and Y1 are non-negative integers.

52. The apparatus according to claim 51, wherein the X1 symbols and the Y1 symbols are determined based on a subcarrier spacing of an initial downlink bandwidth part.

53. The apparatus of claim 52 wherein,
the receiving module is configured to receive X1 and Y1 reported by the terminal.

54. The apparatus according to claim 48, wherein the criterion comprises:
a criterion type 3 comprising a criterion that a second symbol in the second time domain position is within a second time window, wherein the second time window refers to a time window corresponding to the first time domain position.

55. The apparatus according to claim 54, wherein the positioning reference signal is located on a downlink bandwidth part other than an initial downlink bandwidth part.

56. The apparatus according to claim 54, wherein the second time window comprises: symbols at the first time domain position, X2 symbols before the first time domain position, and Y2 symbols after the first time domain position, where X2 and Y2 are non-negative integers.

57. The apparatus according to claim 56, wherein,
the X2 symbols and the Y2 symbols are determined based on a subcarrier spacing of an initial downlink bandwidth part; or
the X2 symbols and the Y2 symbols are determined based on a subcarrier spacing of a downlink bandwidth part other than an initial downlink bandwidth part; or
the X2 symbols and the Y2 symbols are determined based on a subcarrier spacing of an initial downlink bandwidth part and a radio frequency (RF) retuning time; or
the X2 symbols and the Y2 symbols are determined based on a subcarrier spacing of a downlink bandwidth part other than an initial downlink bandwidth part and a RF retuning time.

58. The apparatus according to claim 57, wherein,
the receiving module is configured to receive X2 and Y2 reported by the terminal.

59. A terminal, comprising:
a processor; and
a transceiver connected to the processor;
wherein, the processor is configured to load and execute executable instructions to implement a signal measurement method according to any one of claims 1 to 18.

60. An access network device and/or a location server, wherein the access network device and/or the location server comprises:
a processor; and
a transceiver connected to the processor;
wherein, the processor is configured to load and execute executable instructions to implement a signal measurement method according to any one of claims 19 to 29.

61. A computer-readable storage medium, wherein at least one instruction, at least one program, a code set or an instruction set is stored in the computer-readable storage medium, and the at least one instruction, the at least one program, the code set or the instruction set is loaded and executed by a processor to implement a signal measurement method according to any one of claims 1 to 18, or a signal measurement method according to any one of claims 19 to 29.

62. A computer program product, wherein the computer program product comprises computer instructions, and the computer instructions are stored in a computer-readable storage medium; a processor of a computer device reads the computer instructions from the computer-readable storage medium, and the processor executes the computer instructions, so that the computer device implements a signal measurement method according to any one of claims 1 to 18, or a signal measurement method according to any one of claims 19 to 29.
